# EUROPÄISCHE PATENTANMELDUNG

(11) **EP 4 556 355 A1**
(43) Veröffentlichungstag der Anmeldung: **21.05.2025**
(21) Anmeldenummer: 24208681.7
(22) Anmeldetag: 24.10.2024
(51) Int. Cl.: B62J 11/00, B62J 13/02

(54) **VORRICHTUNG FÜR DIE ANBRINGUNG EINES KETTENSCHUTZES AN EINEM ELEKTROFAHRRAD**

(30) Priorität: 14.11.2023 DE 202023106673 U
(71) Anmelder: SKS metaplast Scheffer-Klute GmbH, 59846 Sundern (DE)
(72) Erfinder: Grabski, Karsten, 59469 Ense (DE)
(74) Vertreter: Schäperklaus, Jochen

(57) **Zusammenfassung**

Vorrichtung (2) für die Anbringung eines Kettenschutzes (1) an einem Elektrofahrrad, umfassend Mittel zur Befestigung des Kettenschutzes (1) an der Vorrichtung (2), Mittel zur Anbringung der Vorrichtung (2) an dem Elektrofahrrad, sowie ein erstes und ein zweites Teil (6, 7), die dazu eingerichtet sind, in mindestens einer ersten Relativposition und in mindestens einer zweiten, von der ersten verschiedenen Relativposition miteinander verbunden und aneinander festgelegt zu werden, wobei die Vorrichtung (2) dazu eingerichtet ist, im miteinander verbundenen und/oder im aneinander festgelegten Zustand der beiden Teile (6, 7) aneinander festgelegt an dem Elektrofahrrad angebracht zu werden.

## Beschreibung

Die vorliegende Erfindung betrifft eine Vorrichtung für die Anbringung eines Kettenschutzes an einem Elektrofahrrad sowie eine Kettenschutzvorrichtung für ein Elektrofahrrad mit einem Kettenschutz und einer derartigen Vorrichtung.

Derartige Vorrichtungen werden auch Steckbrillen genannt, weil sie in der Regel eine ringförmige Gestalt aufweisen.

Eine Vorrichtung für die Anbringung eines Kettenschutzes an einem Elektrofahrrad sowie eine Kettenschutzvorrichtung für ein Elektrofahrrad mit einem Kettenschutz und einer derartigen Vorrichtung sind aus der DE 20 2015 103 692 U1 bekannt. Die darin beschriebene Kettenschutzvorrichtung umfasst einen Kettenschutz sowie eine Vorrichtung, die so ausgebildet ist, dass sie an einem Motorgehäuse eines Elektromotors des Elektrofahrrades befestigbar ist und dass an ihr der Kettenschutz anbringbar ist, wobei die Vorrichtung einen Anschlussflansch umfasst, der an einer dem Motorgehäuse bei der Montage zugewandten Seite eine Anzahl von Rastmitteln aufweist, die so angeordnet und ausgebildet sind, dass jedes der Rastmittel in eine mit diesem korrespondierende Rastausnehmung in einem dem Anschlussflansch zugewandten Teil des Motorgehäuses, insbesondere in einer Gehäuseabdeckung, eingreifen kann.

Aus der DE 20 2007 018 023 U1 ist eine Vorrichtung zum Halten eines Kettenschutzes an einem Fahrrad bekannt, das nicht als Elektrofahrrad ausgebildet ist. Die darin beschriebene Vorrichtung umfasst ein erstes als Ringscheibe ausgebildetes Teil, das an dem Tretlagergehäuse des Fahrrads angeschraubt wird, und ein zweites Teil, an dem der Kettenschutz angeschraubt wird. Nach Vornahme dieser Verschraubungen kann das zweite Teil an dem ersten, bereits am Fahrrad verbauten Teil durch Rastelemente verbunden werden.

Als problematisch bei Elektromotoren kann sich erweisen, dass sie auf der Seite, an denen die Vorrichtung für die Anbringung eines Kettenschutzes befestigt werden soll, störende Geometrien wie beispielsweise Vorsprünge aufweisen können. Diese Geometrien erlauben dabei manchmal nur eine Befestigung der Vorrichtung in einer bestimmten Orientierung. Weiterhin können derartige Elektromotoren in verschiedenen Fahrradrahmen unterschiedliche Einbauwinkel aufweisen, so dass es mit herkömmlichen Vorrichtungen, wie sie beispielsweise aus der DE 20 2015 103 692 U1 bekannt sind, schwierig bis unmöglich sein kann, bei bestimmten Elektromotoren und/oder bestimmten Einbauwinkeln des Elektromotors im Fahrradrahmen eine sinnvolle Anbringung des Kettenschutzes zu ermöglichen.
Der vorliegende Erfindung liegt das Problem zugrunde, eine Vorrichtung der eingangs genannten Art zu schaffen, die auch bei unterschiedlichen Elektromotoren oder unterschiedlichen Einbaustellungen des Elektromotors eine möglichst optimale Anbringung des Kettenschutzes ermöglichen kann. Weiterhin soll eine Kettenschutzvorrichtung der eingangs genannten Art mit einer derartigen Vorrichtung angegeben werden.

Dies wird erfindungsgemäß durch eine Vorrichtung mit den Merkmalen des Anspruchs 1 und eine Kettenschutzvorrichtung mit den Merkmalen des Anspruchs 15 erreicht. Die Unteransprüche betreffen vorteilhafte Weiterbildungen der Erfindung.

Gemäß Anspruch 1 umfasst die Vorrichtung
- Mittel zur Befestigung des Kettenschutzes an der Vorrichtung,
- Mittel zur Anbringung der Vorrichtung an dem Elektrofahrrad, sowie
- ein erstes und ein zweites Teil, die dazu eingerichtet sind, in mindestens einer ersten Relativposition und in mindestens einer zweiten, von der ersten verschiedenen Relativposition miteinander verbunden und aneinander festgelegt zu werden, wobei die Vorrichtung dazu eingerichtet ist, im miteinander verbundenen und/oder im aneinander festgelegten Zustand der beiden Teile an dem Elektrofahrrad angebracht zu werden.

Durch das Vorsehen zweier Teile, die relativ zueinander in unterschiedlichen Relativpositionen verbindbar und/oder festlegbar sind, lässt sich die Vorrichtung an unterschiedliche Geometrien des Elektromotors und/oder an unterschiedliche Einbauwinkel des Elektromotors im Fahrradrahmen anpassen, um eine möglichst optimale Anbringung des Kettenschutzes zu gewährleisten.

Es kann vorgesehen sein, dass die beiden Teile von der ersten in die zweite Relativposition durch eine Drehung eines der Teile gegenüber dem anderen der Teile überführt werden können. Dabei kann die Drehung der beiden Teile zueinander um eine Drehachse erfolgen, die koaxial oder parallel zu der Antriebswelle des Elektromotors des Fahrrads beziehungsweise zu der Tretlagerwelle ist. Durch eine derartige Drehbarkeit der beiden Teile relativ zueinander wird eine Anpassung der Vorrichtung an unterschiedliche Einbauwinkel des Elektromotors im Fahrradrahmen erleichtert.

Es besteht die Möglichkeit, dass jedes der beiden Teile zumindest abschnittsweise teilringförmig ausgebildet ist oder einen teilringförmigen Abschnitt aufweist. Dabei kann die Achse der Teilringform koaxial zu der Drehachse sein. Vorzugsweise können sich dabei die teilringförmigen Abschnitte jeweils relativ zur Drehachse in Umfangsrichtung über einen Winkel zwischen 90° und 180° erstrecken. Im Unterschied zum Stand der Technik erstrecken sich die ringförmigen Abschnitte also nicht umlaufend über 360°. Das verbessert die Anpassbarkeit an eventuell störende Geometrien des Elektromotors.

Es kann vorgesehen sein, dass an einem ersten der beiden Teile mindestens ein Langloch ausgebildet ist, insbesondere dass an dem ersten Teil zwei Langlöcher ausgebildet sind. Dabei kann sich das mindestens eine Langloch relativ zur Drehachse in Umfangsrichtung erstrecken.

Es kann weiterhin vorgesehen sein, dass an dem zweiten Teil mindestens eine Aufnahme für eine Schraube ausgebildet ist, insbesondere dass an dem zweiten Teil zwei Aufnahmen für jeweils eine Schraube ausgebildet sind. Dabei kann die Vorrichtung mindestens eine Schraube umfassen, die sich durch das mindestens eine Langloch in die mindestens eine Aufnahme erstrecken kann, um die beiden Teile miteinander zu verbinden, beziehungsweise kann die Vorrichtung zwei Schrauben umfassen, von denen sich jeweils eine durch eines der Langlöcher in eine der Aufnahmen erstrecken kann, um die beiden Teile miteinander zu verbinden. Durch diese Gestaltung, insbesondere durch die sich in Umfangsrichtung erstreckenden Langlöcher, ergibt sich eine Verbindung zwischen den beiden Teilen, die eine Verdrehung der beiden Teile relativ zueinander ermöglicht. Insbesondere kann dabei die mindestens eine Aufnahme an einem Abschnitt des zweiten Teils angeordnet sein, der in axialer Richtung zu dem teilringförmigen Abschnitt des zweiten Teils so beabstandet ist, dass der axiale Versatz zwischen diesen beiden Abschnitten des zweiten Teils etwa der Dicke des teilringförmigen Abschnitts des ersten Teils entspricht. Durch den der Dicke des teilringförmigen Abschnitts des ersten Teils entsprechenden Versatz zwischen den Abschnitten mit den Aufnahmen und dem teilringförmigen Abschnitt des zweiten Teils ergibt sich eine Führung des ersten Teils an dem zweiten Teil, wodurch die Drehung der Teile zueinander im verbundenen aber noch nicht festgelegten Zustand vereinfacht wird.

Es besteht die Möglichkeit, dass an mindestens einem der beiden Teile eine Winkelskala angeordnet ist, die sich relativ zur Drehachse in Umfangsrichtung erstreckt. Dabei kann an dem anderen der beiden Teile eine Ablesemarkierung angeordnet sein. Beispielsweise kann die Winkelskala an dem zweiten Teil und die Ablesemarke an dem ersten Teil ausgebildet sein. Es besteht durchaus die Möglichkeit, die Winkelskala an dem ersten Teil und die Ablesemarke an dem zweiten Teil auszubilden.

Durch die Winkelskala können beispielsweise seitens des Herstellers der Vorrichtung verschiedene Winkel für verschiedene Kombinationen aus der Geometrie eines bestimmten Elektromotors und eines bestimmten Einbauwinkels dieses Elektromotors in einem Fahrradrahmen angeben werden. Die beiden Teile können genau um diesen Winkel zueinander verdreht und anschließend in dieser verdrehten Stellung festgelegt werden. Daran anschließend kann dann die Befestigung an dem Elektrofahrrad erfolgen. Daran anschließend kann dann der Kettenschutz an der Vorrichtung angebracht werden.

Es kann vorgesehen sein, dass an einem der beiden Teile Mittel zur Befestigung des Kettenschutzes an der Vorrichtung angeordnet sind. Die Mittel zur Befestigung des Kettenschutzes an der Vorrichtung können insbesondere mindestens eine Lasche aufweisen. Vorzugsweise können die Mittel zur Befestigung des Kettenschutzes an der Vorrichtung zwei Laschen aufweisen. Dabei kann die Lasche oder eine jede der Laschen eine Bohrung für eine Schraube für die Verbindung mit dem Kettenschutz aufweisen.

Es kann vorgesehen sein, dass an einem der beiden Teile Mittel zur Anbringung der Vorrichtung an dem Elektrofahrrad angeordnet sind. Die Mittel zur Anbringung der Vorrichtung an dem Elektrofahrrad können insbesondere mindestens eine Bohrung für eine Schraube aufweisen. Vorzugsweise können die Mittel zur Anbringung der Vorrichtung an dem Elektrofahrrad mehrere Bohrungen, wie beispielsweise zwei oder drei Bohrungen, für jeweils eine Schraube aufweisen. Dabei können die Mittel zur Anbringung der Vorrichtung an dem Elektrofahrrad dazu eingerichtet sein, dass sich die Schraube durch die Bohrung in eine Gewindebohrung in einem Motorgehäuse eines Elektromotors des Elektrofahrrads erstreckt oder sich jeweils eine der Schrauben durch eine der Bohrungen in jeweils eine Gewindebohrung in dem Motorgehäuse des Elektromotors des Elektrofahrrads erstreckt.

Insbesondere sind die Mittel zur Befestigung des Kettenschutzes an der Vorrichtung an einem Teil der Vorrichtung und die Mittel zur Anbringung der Vorrichtung an dem Elektrofahrrad an dem anderen Teil der Vorrichtung angeordnet. Dadurch kann das eine der beiden Teile geeignet an dem Elektromotor positioniert werden, um beispielsweise vorspringende Geometrien des Elektromotors zu berücksichtigen, wohingegen das andere der beiden Teile durch die Verdrehbarkeit der beiden Teile zueinander geeignet positioniert werden kann, um eine optimale Anbringung des Kettenschutzes zu gewährleisten.

Beispielsweise sind die Mittel zur Befestigung des Kettenschutzes an der Vorrichtung an dem ersten Teil und die Mittel zur Anbringung der Vorrichtung an dem Elektrofahrrad an dem zweiten Teil angeordnet. Es besteht jedoch durchaus die Möglichkeit, die Mittel zur Befestigung des Kettenschutzes an der Vorrichtung an dem zweiten Teil und die Mittel zur Anbringung der Vorrichtung an dem Elektrofahrrad an dem ersten Teil anzuordnen.

Gemäß Anspruch 15 ist vorgesehen, dass die Kettenschutzvorrichtung eine erfindungsgemäße Vorrichtung umfasst.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine perspektivische Explosionsansicht einer erfindungsgemäßen Kettenschutzvorrichtung mit einem Elektromotor eines Elektrofahrrades;
- Fig. 2: eine Seitenansicht der Kettenschutzvorrichtung gemäß Fig. 1 im an dem Elektromotor angebrachten Zustand;
- Fig. 3: eine perspektivische Ansicht eines ersten Teils einer erfindungsgemäßen Vorrichtung;
- Fig. 4: eine Draufsicht auf das erste Teil;
- Fig. 5: eine perspektivische Ansicht eines zweiten Teils einer erfindungsgemäßen Vorrichtung;
- Fig. 6: eine Draufsicht auf das zweite Teil;
- Fig. 7: eine Seitenansicht des zweiten Teils;
- Fig. 8: eine Draufsicht auf eine erfindungsgemäßen Vorrichtung, bei der die beiden Teile in einer ersten Relativposition miteinander verbunden sind;
- Fig. 9: eine Draufsicht auf die Vorrichtung gemäß Fig. 8, bei der die beiden Teile in einer zweiten Relativposition miteinander verbunden sind;
- Fig. 10: eine perspektivische Ansicht der Vorrichtung gemäß Fig. 8, bei der die beiden Teile in der ersten Relativposition miteinander verbunden sind;
- Fig. 11: eine perspektivische Ansicht der Vorrichtung gemäß Fig. 8, bei der die beiden Teile in der zweiten Relativposition miteinander verbunden sind;
- Fig. 12: eine perspektivische Explosionsansicht der Vorrichtung gemäß Fig. 8 mit dem Elektromotor;
- Fig. 13: eine perspektivische Ansicht der Vorrichtung gemäß Fig. 8 im mit dem Elektromotor verbundenen Zustand, wobei die beiden Teile in der ersten Relativposition miteinander verbunden sind;
- Fig. 14: eine Vorderansicht der Vorrichtung gemäß Fig. 8 im mit dem Elektromotor verbundenen Zustand, wobei die beiden Teile in der ersten Relativposition miteinander verbunden sind;
- Fig. 15: eine Seitenansicht der Vorrichtung gemäß Fig. 8 im mit dem Elektromotor verbundenen Zustand, wobei die beiden Teile in der ersten Relativposition miteinander verbunden sind;
- Fig. 16: eine Vorderansicht der Vorrichtung gemäß Fig. 8 im mit dem Elektromotor verbundenen Zustand, wobei die beiden Teile in der zweiten Relativposition miteinander verbunden sind;
- Fig. 17: eine Seitenansicht der Vorrichtung gemäß Fig. 8 im mit dem Elektromotor verbundenen Zustand, wobei die beiden Teile in der zweiten Relativposition miteinander verbunden sind.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale der nachfolgend beschriebenen Ausführungsbeispiele aufweist.

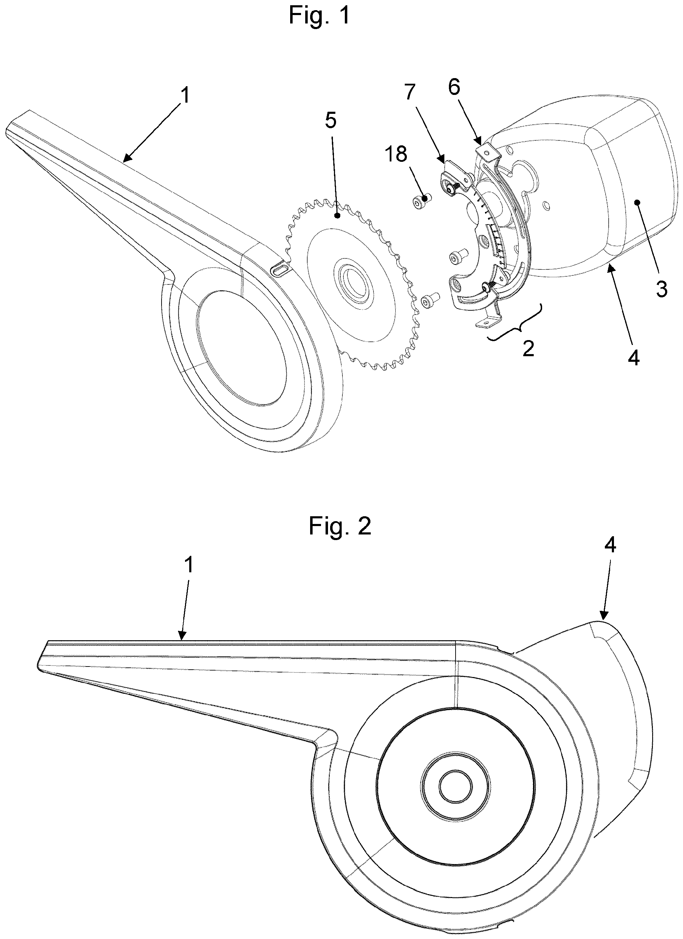

Die in Fig. 1 und Fig. 2 abgebildete Kettenschutzvorrichtung umfasst einen Kettenschutz 1 und eine Vorrichtung 2 für die Anbringung des Kettenschutzes 1 an einem Motorgehäuse 3 eines Elektromotors 4 eines Elektrofahrrads. In Fig. 1 ist weiterhin ein Zahnrad 5 eingezeichnet, das von dem Elektromotor in eine Drehbewegung versetzt werden kann und die nicht abgebildete Kette antreibt.

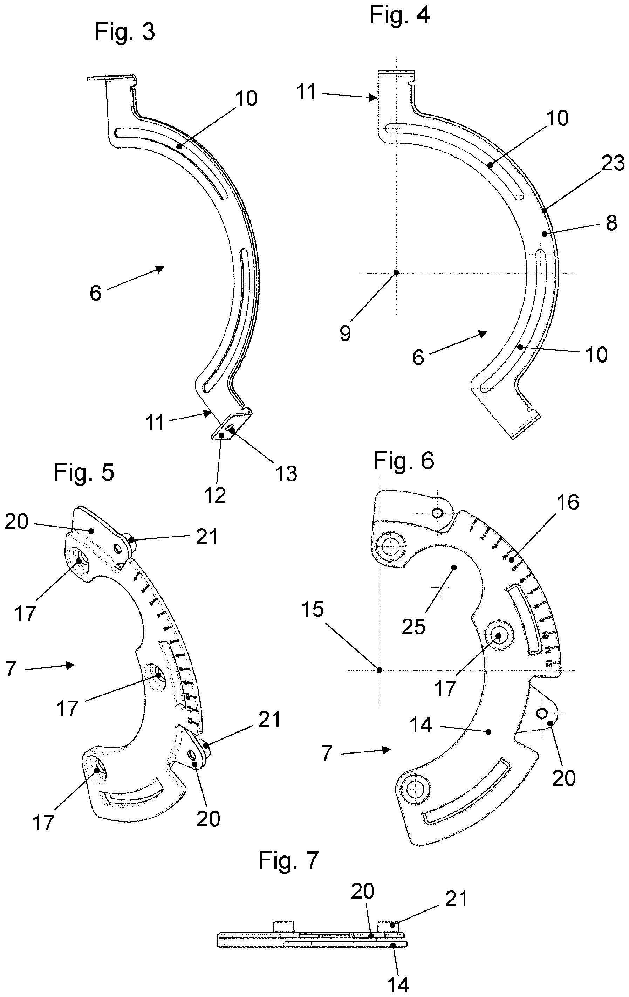

Die Vorrichtung 2 weist ein erstes Teil 6 und ein zweites Teil 7 auf, die in den Fig. 3 bis Fig. 7 detailliert abgebildet sind.

Das in den Fig. 3 und Fig. 4 abgebildete erste Teil 6 kann aus Metall bestehen und ist beispielsweise als Blechteil aus Stahlblech ausgebildet. Das erste Teil 6 ist im Wesentlichen teilringförmig ausgebildet und weist einen teilringförmigen Abschnitt 8 auf, der sich in seiner Umfangsrichtung über einen Winkel von etwa 90° bis 180° erstreckt. Aus Fig. 4 ist eine Achse 9 ersichtlich, die durch den Mittelpunkt des Rings des teilringförmigen Abschnitts 8 verläuft.

In dem teilringförmigen Abschnitt 8 sind zwei Langlöcher 10 ausgebildet, die voneinander beabstandet sind und sich in Umfangsrichtung erstrecken. An den beiden Enden des teilringförmigen Abschnitts 8 ist jeweils eine Lasche 11 angeordnet. Jede der Laschen 11 erstreckt sich hinsichtlich der Achse 9 radial nach außen und weist an ihrem von dem Abschnitt 8 abgewandten Ende einen sich aus der Ebene des teilringförmigen Abschnitts 8 senkrecht herauserstrecken Verbindungsabschnitt 12 auf. In diesem Verbindungsabschnitt 12 ist eine Bohrung 13 für eine Schraubverbindung mit dem Kettenschutz 1 vorgesehen.

Das in den Fig. 5 bis Fig. 7 abgebildete zweite Teil 7 kann zumindest teilweise aus Kunststoff, insbesondere aus thermoplastischem Kunststoff bestehen. Das zweite Teil 7 ist ebenfalls im Wesentlichen teilringförmig ausgebildet und weist einen teilringförmigen Abschnitt 14 auf, der sich in seiner Umfangsrichtung über einen Winkel von etwa 90° bis 180° erstreckt. Aus Fig. 6 ist eine Achse 15 ersichtlich, die durch den Mittelpunkt des Rings des teilringförmigen Abschnitts 14 verläuft.

In dem teilringförmigen Abschnitt 14 ist eine Winkelskala 16 angeordnet, die sich relativ zu der Achse 15 in Umfangsrichtung erstreckt. Eine sich auf die Winkelskala 16 beziehende Ablesemarkierung 23 ist an dem teilringförmigen Abschnitt 8 des ersten Teils 6 angeordnet (siehe dazu beispielsweise Fig. 4).

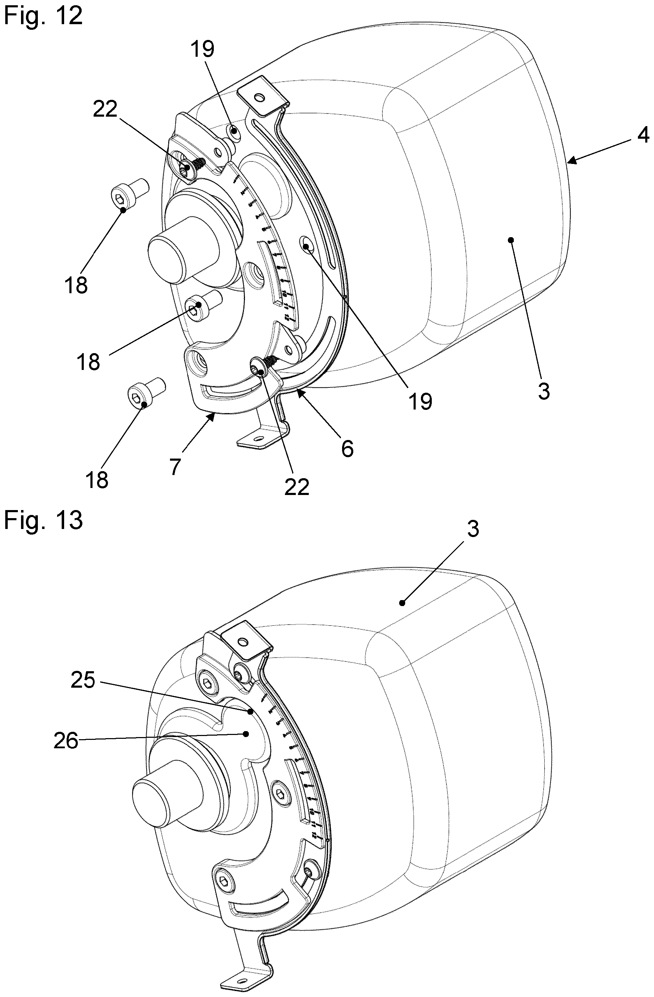

In dem teilringförmigen Abschnitt 14 des zweiten Teils 7 sind drei Bohrungen 17 angeordnet. Die Bohrungen 18 dienen der Befestigung der Vorrichtung 2 an dem Elektrofahrrad, wobei sich im an dem Elektrofahrrad angebrachten Zustand der Vorrichtung durch die Bohrung 17 eine Schraube 18 in eine Gewindebohrung 19 in dem Motorgehäuse 3 erstreckt (siehe dazu auch Fig. 1 und Fig. 12). Die Schrauben 18 können insbesondere metrische Schrauben sein.

Das zweite Teil 7 weist weiterhin zwei in axialer Richtung relativ zu der Ebene des teilringförmigen Abschnitts 14 versetzte Abschnitte 20 auf, die beispielsweise in Fig. 5 nach rechts relativ zu dem Abschnitt 14 und in Fig. 6 in die Zeichenebene hinein zu dem Abschnitt 14 versetzt sind. Der Versatz der versetzen Abschnitte 20 relativ zu dem teilringförmigen Abschnitt 14 entspricht im Wesentlichen der Dicke des teilringförmigen Abschnitts 8 des ersten Teils 6.

Auf der von dem teilringförmigen Abschnitt 14 abgewandten Seite ist an jedem dieser versetzen Abschnitte 20 eine Aufnahme 21 für jeweils eine Schraube 22 vorgesehen. Diese Aufnahme 21 kann beispielsweise aus Metall bestehen.

In den abgebildeten Ausführungsbeispielen weist der teilringförmige Abschnitt 14 des zweiten Teils 7 eine Aussparung 25 auf. Diese Aussparung 25 kann im mit dem Elektrofahrrad verbundenen Zustand einen Vorsprung 26 des Elektromotors 4 aufnehmen (siehe beispielsweise Fig. 13).

Es besteht durchaus die Möglichkeit, dass der teilringförmige Abschnitt 14 keine derartige Aussparung 25 aufweist.

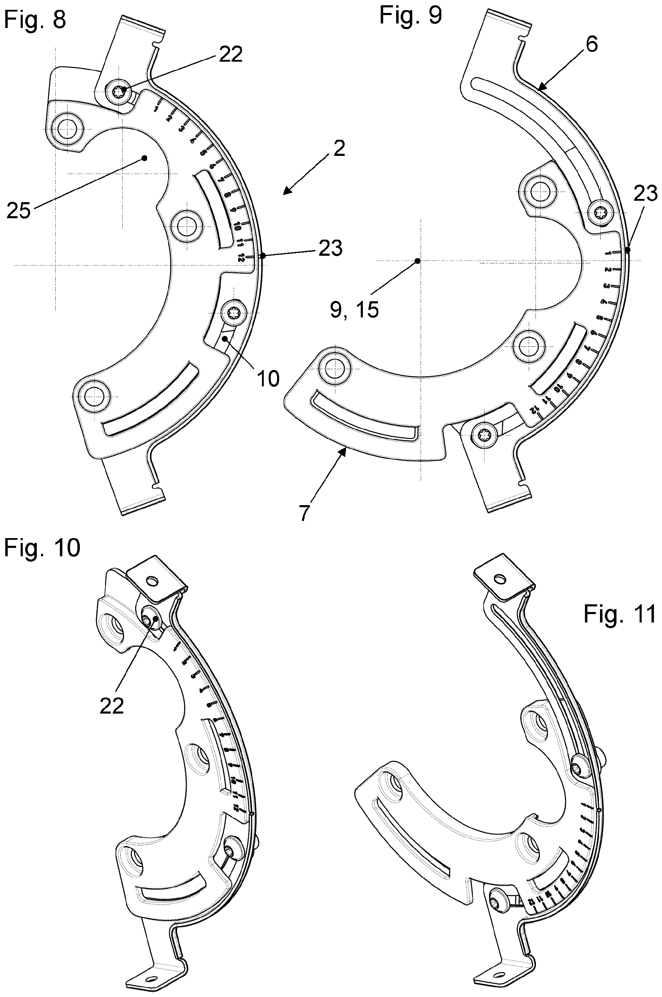

Die Fig. 8 bis Fig. 11 zeigen den miteinander verbundenen Zustand der beiden Teile 6, 7. Im miteinander verbundenen Zustand der Teile 6, 7 sind die Achsen 9, 15 der teilringförmigen Teile 8, 14 koaxial beziehungsweise fallen die Achsen 9, 15 zusammen. Es erstreckt sich jeweils eine Schraube 22 durch ein Langloch 10 des ersten Teils 6 in eine Aufnahme 21 des zweiten Teils 7. Durch den der Dicke des teilringförmigen Abschnitts 8 des ersten Teils 6 entsprechenden Versatz zwischen den Abschnitten 20 und dem teilringförmigen Abschnitt 14 des zweiten Teils 7 ergibt sich eine Führung des ersten Teils 6 an dem zweiten Teil 7. Dabei liegt der teilringförmige Abschnitt 8 des ersten Teils 6 auf einer Seite teilweise an dem teilringförmigen Abschnitt 14 des zweiten Teils 7 und auf der anderen Seite teilweise an den versetzten Abschnitten 20 an.

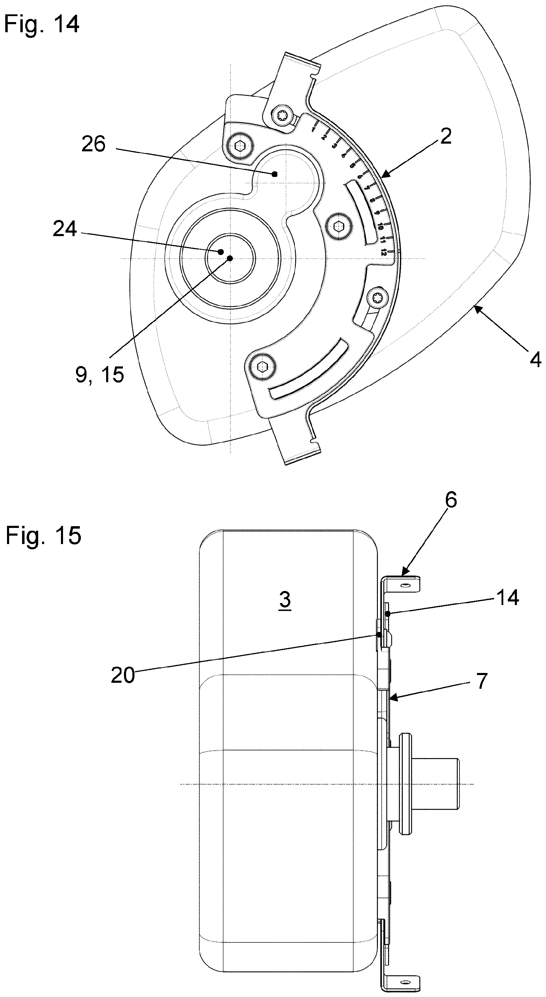

Auf diese Weise wird erreicht, dass die beiden Teile 6, 7 im zwar schon verbundenen aber noch nicht durch Anziehen der Schrauben 22 festgelegten Zustand relativ zueinander verdreht werden können. Die Drehachse um die die Relativdrehung erfolgen kann, ist koaxial zu den Achsen 9, 15 beziehungsweise fällt mit diesen zusammen. Vorzugsweise sind die Achsen 9, 15 auch koaxial zu der Antriebswelle 24 des Elektromotors 4 beziehungsweise zu der Tretlagerwelle (siehe dazu beispielsweise Fig. 14).

Wenn die gewünschte Relativposition erreicht ist, können die Teile 6, 7 durch Festziehen der Schrauben 22 aneinander festgelegt werden. In diesem aneinander festgelegten Zustand der Teile 6. 7 wird die Vorrichtung 2 dann an dem Motorgehäuse 3 angebracht.

Aufgrund der Ausdehnung der Langlöcher 10 in Umfangsrichtung lassen sich die beiden Teile 6, 7 relativ zueinander über einen vergleichsweise großen Winkelbereich verstellen. Beispielsweise zeigen die Fig. 8 und die Fig. 10 eine erste Relativposition der beiden Teile 6, 7 und die Fig. 9 und die Fig. 11 eine zweite Relativposition der beiden Teile 6, 7, die von der ersten Relativposition deutlich verschieden ist, insbesondere um einen Winkel von mehr als 50° verschieden ist.

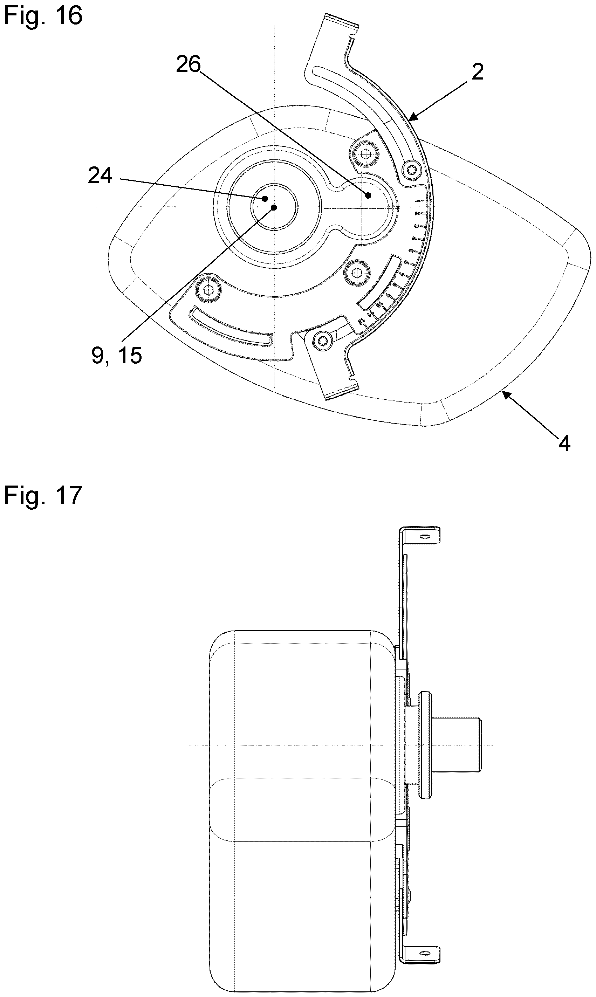

Beispielsweise zeigt der Vergleich der beiden Fig. 14 und Fig. 16 das trotz unterschiedlich an dem Fahrrad angebrachten Elektromotoren 4 durch entsprechende Wahl der Relativposition der beiden Teile 6, 7 zueinander die Position der Verbindungsabschnitte 12 für die Schraubverbindung mit dem Kettenschutz 1 beibehalten werden kann. Es kann durch die Verdrehbarkeit der Teile 6, 7 zueinander also gewährleistet werden, dass vergleichsweise unabhängig von der Art oder dem Verbau des Elektromotors 4 eine optimale Anbringung des Kettenschutzes 1 gewährleistet wird.

## Patentansprüche

1. Vorrichtung (2) für die Anbringung eines Kettenschutzes (1) an einem Elektrofahrrad, umfassend
- Mittel zur Befestigung des Kettenschutzes (1) an der Vorrichtung (2),
- Mittel zur Anbringung der Vorrichtung (2) an dem Elektrofahrrad, sowie
- ein erstes und ein zweites Teil (6, 7), die dazu eingerichtet sind, in mindestens einer ersten Relativposition und in mindestens einer zweiten, von der ersten verschiedenen Relativposition miteinander verbunden und aneinander festgelegt zu werden, wobei die Vorrichtung (2) dazu eingerichtet ist, im miteinander verbundenen und/oder im aneinander festgelegten Zustand der beiden Teile (6, 7) aneinander festgelegt an dem Elektrofahrrad angebracht zu werden.

2. Vorrichtung (2) nach Anspruch 1, **dadurch gekennzeichnet, dass** die beiden Teile (6, 7) von der ersten in die zweite Relativposition durch eine Drehung eines der Teile (6, 7) gegenüber dem anderen der Teile (6, 7) überführt werden können.

3. Vorrichtung (2) nach Anspruch 2, **dadurch gekennzeichnet, dass** die Drehung der beiden Teile (6, 7) zueinander um eine Drehachse erfolgt, die koaxial oder parallel zu der Antriebswelle (24) des Elektromotors des Fahrrads beziehungsweise zu der Tretlagerwelle ist.

4. Vorrichtung (2) nach einem der Ansprüche 1 bis 3, **dadurch gekennzeichnet, dass** jedes der beiden Teile (6, 7) zumindest abschnittsweise teilringförmig ausgebildet ist oder einen teilringförmigen Abschnitt (8, 14) aufweist, insbesondere wobei die Achse (9, 15) der Teilringform koaxial zu der Drehachse ist.

5. Vorrichtung (2) nach Anspruch 4, **dadurch gekennzeichnet, dass** sich die teilringförmigen Abschnitte (8, 14) jeweils relativ zur Drehachse in Umfangsrichtung über einen Winkel zwischen 90° und 180° erstrecken.

6. Vorrichtung (2) nach einem der Ansprüche 1 bis 5, **dadurch gekennzeichnet, dass** an einem ersten der beiden Teile (6, 7) mindestens ein Langloch (10), vorzugsweise zwei Langlöcher (10), ausgebildet ist oder sind, insbesondere wobei das mindestens eine Langloch (10) sich relativ zur Drehachse in Umfangsrichtung erstreckt.

7. Vorrichtung (2) nach einem der Ansprüche 1 bis 6, **dadurch gekennzeichnet, dass** an dem zweiten Teil (7) mindestens eine Aufnahme (21) für eine Schraube (22), vorzugsweise zwei Aufnahmen (21) für jeweils eine Schraube (22), ausgebildet ist oder sind, insbesondere wobei die Vorrichtung (2) mindestens eine Schraube (22) umfasst, die sich durch das mindestens eine Langloch (10) in die mindestens eine Aufnahme (21) erstrecken kann, um die beiden Teile (6, 7) miteinander zu verbinden, oder insbesondere wobei die Vorrichtung (2) zwei Schrauben (22) umfasst, von denen sich jeweils eine durch eines der Langlöcher (10) in eine der Aufnahmen (21) erstrecken kann, um die beiden Teile (6, 7) miteinander zu verbinden.

8. Vorrichtung (2) nach Anspruch 7, **dadurch gekennzeichnet, dass** die mindestens eine Aufnahme (21) an einem Abschnitt (20) des zweiten Teils (7) angeordnet ist, der in axialer Richtung zu dem teilringförmigen Abschnitt (14) des zweiten Teils (7) so beabstandet ist, dass der axiale Versatz zwischen diesen beiden Abschnitten (14, 20) des zweiten Teils (7) etwa der Dicke des teilringförmigen Abschnitts (8) des ersten Teils (6) entspricht.

9. Vorrichtung (2) nach einem der Ansprüche 1 bis 8, **dadurch gekennzeichnet, dass** an mindestens einem der beiden Teile (6, 7) eine Winkelskala (16) angeordnet ist, die sich relativ zur Drehachse in Umfangsrichtung erstreckt, insbesondere wobei die Winkelskala (16) an dem zweiten Teil (7) ausgebildet ist.

10. Vorrichtung (2) nach einem der Ansprüche 1 bis 9, **dadurch gekennzeichnet, dass** an einem der beiden Teile (6, 7) Mittel zur Befestigung des Kettenschutzes (1) an der Vorrichtung (2) angeordnet sind, insbesondere wobei die Mittel zur Befestigung des Kettenschutzes (1) an der Vorrichtung (2) an dem ersten Teil (6) angeordnet sind.

11. Vorrichtung (2) nach Anspruch 10, **dadurch gekennzeichnet, dass** die Mittel zur Befestigung des Kettenschutzes (1) an der Vorrichtung (2) mindestens eine Lasche (11), vorzugsweise zwei Laschen (11), aufweisen, insbesondere wobei die Lasche (11) oder eine jede der Laschen (11) eine Bohrung (13) für eine Schraube für die Verbindung mit dem Kettenschutz aufweist.

12. Vorrichtung (2) nach einem der Ansprüche 1 bis 11, **dadurch gekennzeichnet, dass** an einem der beiden Teile (6, 7) Mittel zur Anbringung der Vorrichtung (2) an dem Elektrofahrrad angeordnet sind, insbesondere wobei die Mittel zur Anbringung der Vorrichtung (2) an dem Elektrofahrrad an dem zweiten Teil (7) angeordnet sind.

13. Vorrichtung (2) nach Anspruch 12, **dadurch gekennzeichnet, dass** die Mittel zur Anbringung der Vorrichtung (2) an dem Elektrofahrrad mindestens eine Bohrung (17) für eine Schraube (18) aufweisen, vorzugsweise wobei die Mittel zur Anbringung der Vorrichtung (2) an dem Elektrofahrrad mehrere Bohrungen (17), wie beispielsweise zwei oder drei Bohrungen (17), für jeweils eine Schraube (18) aufweisen.

14. Vorrichtung (2) nach einem der Ansprüche 12 oder 13, **dadurch gekennzeichnet, dass** die Mittel zur Anbringung der Vorrichtung (2) an dem Elektrofahrrad dazu eingerichtet sind, dass sich die Schraube (18) durch die Bohrung (17) in eine Gewindebohrung (19) in einem Motorgehäuse (3) eines Elektromotors (4) des Elektrofahrrads erstreckt oder sich jeweils eine der Schrauben (18) durch eine der Bohrungen (17) in jeweils eine Gewindebohrung (19) in dem Motorgehäuse (3) des Elektromotors (4) des Elektrofahrrads erstreckt.

15. Kettenschutzvorrichtung für ein Elektrofahrrad, umfassend einen Kettenschutz (1) und eine Vorrichtung (2) nach einem der Ansprüche 1 bis 14.
